# EUROPÄISCHE PATENTSCHRIFT

(11) **EP 2 987 435 B1**
(45) Veröffentlichungstag und Bekanntmachung des Hinweises auf die Patenterteilung: **18.03.2020**
(21) Anmeldenummer: 15180481.2
(22) Anmeldetag: 11.08.2015
(51) Int. Cl.: A47J 31/44, A47J 31/46, A47J 31/60

(54) **VORRICHTUNG UND VERFAHREN ZUM AUFSCHÄUMEN EINES FLÜSSIGEN LEBENSMITTELS, INSBESONDERE VON MILCH**
DEVICE AND METHOD FOR FOAMING LIQUID FOOD, IN PARTICULAR MILK
DISPOSITIF ET PROCÉDÉ DE MOUSSAGE D'UN ALIMENT LIQUIDE, NOTAMMENT DU LAIT

(30) Priorität: 20.08.2014 DE 102014216534
(43) Veröffentlichungstag der Anmeldung: 24.02.2016
(73) Patentinhaber: FRANKE Kaffeemaschinen AG, 4663 Aarburg (CH)
(72) Erfinder: Turi, Mariano, 8046 Zürich (CH); Vetterli, Heinz, 8855 Wangen (CH)
(74) Vertreter: Lemcke, Brommer & Partner Patentanwälte Partnerschaft mbB

(56) Entgegenhaltungen:
- EP-A1- 2 583 596
- EP-B1- 1 593 330
- EP-B1- 2 298 142
- US-B1- 6 192 785

## Beschreibung

Die Erfindung betrifft eine Vorrichtung sowie ein Verfahren zum Aufschäumen eines flüssigen Lebensmittels, insbesondere eine Vorrichtung zum Aufschäumen von Milch gemäß Oberbegriff des Anspruchs 1.

Zum Aufschäumen eines flüssigen Lebensmittels sind Vorrichtungen bekannt, bei denen mittels einer Pumpe das flüssige Lebensmittel aus einem Behälter gefördert wird, wobei saugseitig der Pumpe Luft mittels einer Luftzufuhr zugeführt wird.

Vorrichtungen nach diesem grundsätzlichen Aufbau sind beispielsweise aus EP 1 593 330 B1 zum Erzeugen von warmem Milchschaum und aus EP 2 298 142 B1 sowie EP 2 120 656 B1 und EP 2 583 596 zum wahlweisen Erzeugen von warmem oder kaltem Milchschaum bekannt.

Der vorliegenden Erfindung liegt die Aufgabe zugrunde, die Schaumqualität des aufgeschäumten Lebensmittels zu verbessern.

Gelöst ist diese Aufgabe durch eine Vorrichtung gemäß Anspruch 1 sowie durch ein Verfahren gemäß Anspruch 9. Bevorzugte Ausführungsformen der erfindungsgemäßen Vorrichtung finden sich in den Ansprüchen 2 bis 8 und des erfindungsgemäßen Verfahrens in den Ansprüchen 10 bis 12.

Die erfindungsgemäße Vorrichtung ist vorzugsweise zum Durchführen des erfindungsgemäßen Verfahrens, insbesondere einer bevorzugten Ausführungsform hiervon ausgebildet. Das erfindungsgemäße Verfahren ist vorzugsweise zum Durchführen mittels der erfindungsgemäßen Vorrichtung, insbesondere einer bevorzugten Ausführungsform hiervon ausgebildet.

Die erfindungsgemäße Vorrichtung zum Aufschäumen eines flüssigen Lebensmittels, insbesondere von Milch weist eine Pumpe zum Fördern des flüssigen Lebensmittels aus einem Behälter, einen Durchlauferhitzer, mindestens eine Drossel und eine Luftzufuhr auf. Die Drossel und der Durchlauferhitzer sind druckseitig der Pumpe angeordnet und die Luftzufuhr ist derart ausgebildet und angeordnet, dass Luft in den Flussweg des Lebensmittels stromaufwärts der Drossel zugeführt werden kann.

Ein solcher Aufbau ist grundsätzlich aus den zuvor genannten Veröffentlichungen bekannt.

Wesentlich ist, dass die Vorrichtung derart ausgebildet ist, dass wahlweise
- in einem Warmschaum-Modus ein erster Flussweg für das Lebensmittel-Luftgemisch durch eine druckseitig der Pumpe angeordnete erste Drossel mit einem ersten Drosselquerschnitt, sowie durch den Durchlauferhitzer oder
- in einem Kaltschaum-Modus ein zweiter Flussweg für das Lebensmittel-Luftgemisch durch eine zweite Drossel mit einem zweiten Drosselquerschnitt vorgebbar ist. Hierbei sind erster und zweiter Drosselquerschnitt unterschiedlich.

Druckseitig der Pumpe sind zumindest zwei Flusswege für das Lebensmittel-Luftgemisch vorgesehen, wobei der Durchlauferhitzer in einem ersten der zumindest zwei parallelen Flusswege angeordnet ist und wobei die eine Drossel in dem zweiten und die weitere Drossel in dem ersten der parallelen Flusswege angeordnet ist. Somit ist wahlweise ein Flussweg für das Lebensmittel-Luftgemisch durch den einen oder durch den anderen der parallelen Flusswege vorgebbar.

Mittels der erfindungsgemäßen Vorrichtung kann ein Benutzer somit wahlweise kalten oder warmen Schaum des Lebensmittels erzeugen, wobei für die Erzeugung des kalten Schaums ein unterschiedlicher Drosselquerschnitt verglichen mit dem Drosselquerschnitt bei Erzeugen des warmen Schaums verwendet wird.

Untersuchungen haben ergeben, dass die Parameter zur Herstellung einer gewünschten Schaumkonsistenz und insbesondere der optimale Drosselquerschnitt von der Temperatur des flüssigen Lebensmittels abhängen. Mit der erfindungsgemäßen Vorrichtung kann somit eine Optimierung bei der Schaumerzeugung einerseits für die Erzeugung von warmem Schaum und andererseits für die Erzeugung von kaltem Schaum erzielt werden.

Untersuchungen haben gezeigt, dass hierbei vorzugsweise sowohl erster, als auch zweiter Drosselquerschnitt derart gewählt sind, dass jeweils eine Drosselfunktion ausgeübt wird, d. h. dass bei beiden Drosselquerschnitten eine Querschnittsverjüngung im Flussweg des Lebensmittel-Luftgemischs am Ort der Drossel auftritt, jedoch unterschiedlich starke Querschnittsverjüngungen im Kaltschaum-Modus einerseits und im Warmschaum-Modus andererseits.

Hierdurch wird eine bisher nicht erreichte Qualität bei beiden Schaumarten - sowohl kalt, als auch warm - erzielt.

Bei dem erfindungsgemäßen Verfahren zum Aufschäumen eines flüssigen Lebensmittels, insbesondere zum Aufschäumen von Milch wird das flüssige Lebensmittel mit Luft vermischt und wahlweise erwärmt. Wesentlich ist hierbei, dass in einem Warmschaum-Modus das Lebensmittels-Luftgemisch mit einem ersten Drosselquerschnitt gedrosselt wird und in einem Kaltschaum-Modus das Lebensmittel-Luftgemisch mit einem zweiten Drosselquerschnitt gedrosselt wird, wobei erster und zweiter Drosselquerschnitt unterschiedlich sind. Bei dem erfindungsgemäßen Verfahren erfolgt somit bei Herstellung von warmem und von kaltem Schaum eine Drosselung aufgrund einer Reduzierung im Leitungsquerschnitt, jedoch ist in dem Kaltschaum-Modus der Drosselquerschnitt unterschiedlich zu dem Warmschaum-Modus.

Hierdurch ergeben sich die zuvor bei der Beschreibung der erfindungsgemäßen Vorrichtung aufgeführten Vorteile.

Indem druckseitig der Pumpe zumindest zwei Flusswege für das Lebensmittel-Luftgemisch ausgebildet, wobei der Durchlauferhitzer in einem ersten der zumindest zwei parallelen Flusswege angeordnet ist, wird erreicht, dass lediglich bei Durchlaufen des einen (ersten) Flussweges das Lebensmittel-Luftgemisch den Durchlauferhitzer durchströmt. Bei Erzeugen von kaltem Schaum wird hingegen das Lebensmittel-Luftgemisch durch den zweiten Flussweg geleitet, so dass kein Durchströmen des Durchlauferhitzers erfolgt.

Hierdurch ergibt sich der Vorteil, dass im Kaltschaum-Modus kein Verschmutzen des Durchlauferhitzers erfolgt und dass es darüber hinaus unerheblich ist, ob der Durchlauferhitzer aufgrund seiner thermischen Masse auch im ausgeschalteten Zustand noch Restwärme abgibt, da wie zuvor beschrieben im Kaltschaum-Modus der Durchlauferhitzer nicht durchflossen wird.

Vorzugsweise ist hierfür druckseitig der Pumpe eine Verzweigung im Flussweg des Lebensmittel-Luftgemischs in zumindest die zuvor beschriebenen zwei parallelen Flusswege vorgesehen. Hierbei kann ein Mehrwegeventil im Flussweg des Lebensmittel-Luftgemischs an der vorgenannten Verzweigung angeordnet sein, so dass mittels des Mehrwege-Ventils in einfacher Weise der gewünschte Flussweg gewählt werden kann. Ebenso ist es möglich, eine Leitungsverzweigung vorzusehen (eine so genannte Y-Verzweigung) und in jedem der beiden parallelen Flusswege jeweils ein Ventil vorzusehen, so dass durch Öffnen eines Ventils und Schließen des anderen Ventils ebenso der gewünschte Flussweg vorgegeben werden kann. Letztere Ausführungsform bietet den Vorteil, dass die beiden Ventile gleichzeitig als Drossel ausgebildet werden können, d. h. jedes der beiden Ventile bietet die Möglichkeit, vollständig geschlossen zu sein oder einen variablen, vorgebbaren Durchflussquerschnitt auszubilden.

Ebenso liegt es im Rahmen der Erfindung, in jedem der beiden parallelen Flusswege jeweils ein Ventil und eine Drossel vorzusehen, vorzugsweise jeweils ein Ventil und eine variable Drossel.

Es liegt somit im Rahmen der Erfindung, dass die Vorrichtung die erste Drossel und die zweite Drossel aufweist, wobei die erste Drossel in dem ersten und die zweite Drossel in dem zweiten der beiden parallelen Flusswege angeordnet ist, so dass im Kaltschaum-Modus das Lebensmittel-Luftgemisch über die zweite Drossel in dem zweiten parallelen Flussweg unter Umgehung des Durchlauferhitzers zu einem Auslass geführt wird und im Warmschaum-Modus das Lebensmittel-Luftgemisch über die erste Drossel durch den ersten der beiden parallelen Flusswege und somit auch durch den Durchlauferhitzer geleitet wird.

Eine besonders hohe Schaumqualität wird erzielt, indem die eine Drossel stromaufwärts des Durchlaufhitzers und/oder druckseitig der Pumpe angeordnet ist. Insbesondere wird ein gutes Schaumergebnis erzielt, indem die eine Drossel sowohl stromaufwärts des Durchlauferhitzers, als auch druckseitig der Pumpe angeordnet ist.

Bei der bevorzugten Ausführungsform sind bevorzugt beide Drosseln druckseitig der Pumpe angeordnet und die zweite Drossel ist wie zuvor beschrieben stromaufwärts des Durchlauferhitzers angeordnet.

Weiterhin ist es für die Schaumqualität vorteilhaft, dass die Luftzufuhr stromaufwärts der beiden Drosseln, vorzugsweise saugseitig der Pumpe angeordnet ist. In der Ausführungsform mit der ersten und der zweiten Drossel ist entsprechend die Luftzufuhr bevorzugt stromaufwärts beider Drosseln, insbesondere bevorzugt saugseitig der Pumpe angeordnet.

Weiterhin ist zum Erzielen einer hohen Schaumqualität die Ausbildung der Pumpe als Zahnradpumpe vorteilhaft.

Es liegt im Rahmen der Erfindung, dass die Luftzuführung aktiv erfolgt, insbesondere mittels einer Luftpumpe.

In einer vorzugsweisen Ausführungsform erfolgt die Luftzuführung mittels des Venturieffekts. Hierzu weist die Luftzufuhr ein entsprechendes Venturielement auf, welches im Flussweg des Lebensmittels angeordnet und derart ausgebildet ist, so dass mittels des Venturieffekts aufgrund der Strömung des flüssigen Lebensmittels Luft zugeführt wird. Diese passive Luftzuführung weist den Vorteil auf, dass keine zusätzlichen Komponenten wie etwa eine Luftpumpe notwendig sind.

Die Luftzufuhr ist vorteilhafterweise als variable Luftzufuhr ausgebildet, so dass wahlweise zumindest zwei unterschiedliche Luftzuführströme vorgebbar sind. Hierdurch ist eine weitere Optimierung der Schaumqualität durch Vorgabe einer optimierten Menge an zugegebener Luft möglich. Insbesondere ist daher vorteilhaft, dass die Vorrichtung wie zuvor beschrieben eine Steuereinheit aufweist, welche mit der variablen Luftzufuhr verbunden und derart zusammenwirkend ausgebildet ist, dass mittels Steuersignalen der Steuereinheit unterschiedliche Luftzuführströme vorgebbar sind. In dieser bevorzugten Ausführungsform kann somit in vorteilhafterweise im Kaltschaum-Modus ein unterschiedlicher Luftzuführfluss (d.h. Luftmenge pro Zeit) vorgegeben werden, verglichen mit dem Luftzuführfluss im Warmschaum-Modus. Insbesondere in Kombination mit einer oder mehrerer variabler Drosseln wie zuvor beschrieben sind in dieser vorzugsweisen Ausführungsform somit bereits die Parameter Drosselquerschnitt und Luftzuführfluss jeweils separat für einerseits den Kaltschaum-Modus und andererseits den Warmschaum-Modus vorgebbar, so dass für beide Modi eine optimale Schaumqualität erzielt werden kann.

Vorteilhafterweise weist die Luftzufuhr daher ein variables, steuerbares Luftventil auf. Ein solches kann als an sich bekanntes, mittels eines Elektromotors angetriebenes Ventil ausgebildet sein.

Besonders vorteilhaft ist es jedoch, das Luftventil als intermittierendes Luftventil auszubilden, da durch eine entsprechende Taktung bei der Vorgabe des Luftzuführflusses eine weitere Erhöhung der Schaumqualität möglich ist. Die Verwendung solch eines intermittierenden Luftventils ist in EP 2 298 142 B1 beschrieben und erfolgt bevorzugt ananolg bei der erfindungsgemäßen Vorrichtung.

In einer weiteren vorteilhaften Ausführungsform, in welcher die Vorrichtung eine Steuervorrichtung wie zuvor beschrieben aufweist, ist die Pumpe mit der Steuereinheit verbunden und derart zusammenwirkend ausgebildet, dass mittels Steuersignalen der Steuereinheit die Fördermenge der Pumpe wahlweise vorgebbar ist. In dieser bevorzugten Ausführungsform kann somit auch im Kaltschaum-Modus eine unterschiedliche Fördermenge zu dem Warmschaum-Modus vorgegeben werden. Dies ist insbesondere vorteilhaft, wenn wie zuvor beschrieben, zusätzlich die Luftzuführmenge und der Drosselquerschnitt jeweils für Warmschaum-Modus einerseits und Kaltschaum-Modus andererseits vorgegeben werden können, da hierdurch eine weitere Optimierung der Schaumqualität möglich ist.

Die erfindungsgemäße Vorrichtung kann zum Aufschäumen unterschiedlicher flüssiger Lebensmittel eingesetzt werden. Insbesondere ist die Vorrichtung zum Aufschäumen von Milch geeignet. Aufgeschäumte Milch wird bei einer Vielzahl von Mischgetränken verwendet, insbesondere bei Kaffee-Mischgetränken. Die erfindungsgemäße Vorrichtung ist daher bevorzugt als Bestandteil einer Kaffeemaschine zum Erzeugen von Kaffee-Mischgetränken ausgebildet, wobei die Kaffeemaschine vorzugsweise eine Brüheinheit zum Erzeugen von Kaffee aufweist, so dass Kaffee zusammen und/oder zeitlich versetzt mit Milch und/oder aufgeschäumter Milch, insbesondere wahlweise warmem Milchschaum oder kaltem Milchschaum ausgegeben werden kann. Ebenso liegt es im Rahmen der Erfindung, die Vorrichtung als Beistellgerät insbesondere für eine Kaffeemaschine auszubilden. Vorzugsweise weist die Vorrichtung hierbei einen Ausgabeanschluss auf, an welchem ein entsprechender Milchschaumeinlass der Kaffeemaschine fluidleitend angeschlossen werden kann, so dass der mittels der Vorrichtung erzeugte Milchschaum über die Kaffeemaschine zu einem Auslass der Kaffeemaschine geleitet werden kann.

Bei Verwendung von flüssigen Lebensmitteln ist es notwendig, die von dem Lebensmittel durchströmten Komponenten zu spülen. Dies trifft insbesondere bei Verwendung von Milch und bei Anwendung der Vorrichtung im nicht privaten Bereich, insbesondere im Gastronomiebereich zu.

In einer bevorzugten Ausführungsform weist die Vorrichtung daher eine Spülleitung auf, welche zum Zuführen von Spülflüssigkeit und/oder Dampf zumindest zu der ersten Drossel und dem Durchlauferhitzer ausgebildet ist. Vorzugsweise mündet die Spülleitung somit stromaufwärts von erster Drossel und Durchlauferhitzer in den Flussweg des flüssigen Lebensmittels.

Hierdurch kann somit mittels der Spülflüssigkeit und/oder des Dampfes eine Spülung der Drossel und des Durchlauferhitzers erfolgen. Besonders vorteilhaft ist hierbei die zuvor beschriebene Ausbildung der Drossel als variable Drossel mit einem variablen Drosselquerschnitt, so dass wahlweise ein Spül-Drosselquerschnitt vorgebbar ist, wobei der Spül-Drosselquerschnitt größer als der erste und der zweite Drosselquerschnitt ist. Hierdurch kann somit ein besonders effizienter Spülvorgang erzielt werden, da die Drosselwirkung beim Spülvorgang aufgrund des vergrößerten Drosselquerschnitts verringert ist. Insbesondere ist es vorteilhaft, bei dem Spülvorgang keinerlei Drosselwirkung auszubilden, d. h. den Drosselquerschnitt derart zu wählen, dass keine Reduzierung des Leitungsquerschnitts gegenüber der stromaufwärts liegenden Leitung vorliegt, so dass ein optimaler Fluss des Spülmittels möglich ist.

Insbesondere der Durchlauferhitzer muss gründlich gereinigt werden, da aufgrund der Erwärmung des Lebensmittel-Luftgemischs in dem Durchlauferhitzer ein erhöhtes Risiko eines Anhaftens, insbesondere eines Anbackens von Lebensmittelresten in dem Durchlauferhitzer besteht. Vorzugsweise ist daher bei Ausbildung der Vorrichtung mit zwei parallelen Flusswegen und einer ersten und einer zweiten Drossel wie zuvor beschrieben zumindest die im Flussweg des Durchlauferhitzers liegende Drossel mit variablem Drosselquerschnitt ausgebildet, so dass zumindest bei Spülen des Durchlauferhitzers ein Öffnen dieser Drossel und somit effizientes Spülen des Durchlauferhitzers möglich ist.

Der Begriff Drossel im Sinne dieser Anmeldung bezeichnet ein Element, welches eine verringerte Durchflussfläche (= die Fläche des Drosselquerschnitts), welche somit eine Verengung des Leitungsquerschnitts darstellt, gegenüber der unmittelbar stromaufwärts liegenden Leitung aufweist. Die Durchflussfläche ist bevorzugt zumindest annähernd kreisförmig, so dass sich die Durchflussfläche aus (Durchmesser der Drosselquerschnittsfläche)² mal Pi mal ¼ ergibt. Ebenso liegen andere Formen des Drosselquerschnitts im Rahmen der Erfindung.

Grundsätzlich können erster und zweiter Drosselquerschnitt sich lediglich in der Form, nicht jedoch in der Querschnittsfläche unterscheiden, da insbesondere aufgrund nicht laminarer Strömungen unterschiedliche Formen zu unterschiedlichen Drosselwirkungen führen können. Vorzugsweise unterscheiden sich erster und zweiter Drosselquerschnitt jedoch zumindest hinsichtlich der Querschnittsfläche, um auch bei laminaren Strömungen eine unterschiedliche Drosselwirkung zu gewährleisten. Eine besonders technisch einfach realisierbare Ausführungsform wird hierbei erzielt, indem erster und zweiter Drosselquerschnitt die gleiche Form aufweisen, insbesondere in etwa kreisförmig sind.

Untersuchungen haben ergeben, dass bevorzugt im Kaltschaum-Modus eine größere Drosselquerschnittsfläche gegenüber dem Warmschaum-Modus vorgesehen ist.

Stromabwärts der Drossel ist bevorzugt eine Erweiterung des Leitungsquerschnitts vorgesehen. Hierbei liegt es im Rahmen der Erfindung, dass der Abstand zwischen Verengung und Erweiterung des Leitungsquerschnitts sehr gering ist, insbesondere kleiner 1 cm, weiter bevorzugt kleiner 0,2 cm. Insbesondere können die eine und/oder die weitere Drossel somit als Blende ausgebildet sein. Ebenso liegen größere Abstände zwischen Verengung und Erweiterung des Leitungsquerschnitts im Rahmen der Erfindung, vorzugsweise ist der Abstand kleiner 20 cm, insbesondere kleiner 10 cm.

Bei in etwa kreisförmigen Drosselquerschnitten liegt der Drosselquerschnittsdurchmesser zur Erzeugung hochwertigen Schaums bevorzugt im Bereich 0,5 mm bis 2 mm.

Die Drosselquerschnittsfläche liegt bevorzugt im Bereich 0,2 mm² bis 3,14 mm².

Die mittels Zusammenwirkung insbesondere von Pumpe, druckseitig der Pumpe angeordneter Drossel und Leitungsquerschnitt und Leitungslänge insbesondere stromabwärts der Drossel erzeugten Druckverhältnisse sind zur Erzeugung qualitativ hochwertigen Schaums bevorzugt wie folgt:
Vorzugsweise sind Pumpe und Drossel derart zusammenwirkend ausgebildet, dass zwischen Pumpe und Drossel ein Druck im Bereich 2 bar bis 10 bar, insbesondere im Bereich 3 bar bis 7 bar, bevorzugt etwa 5 bar vorliegt. Der Druck fällt nach der Erweiterung des Leitungsquerschnitts stromabwärts der Drossel bevorzugt um mindestens 1 bar, insbesondere mindestens 2 bar, weiter bevorzugt um mindestens 3 bar ab.

Die vorangehend beschriebenen bevorzugten Wertebereiche für Drosselquerschnitt und Druck werden bevorzugt sowohl im Warmschaum-Modus, als auch im Kaltschaum-Modus realisiert, wobei der Drosselquerschnitt im Warmschaum-Modus unterschiedlich zu dem im Kaltschaum-Modus ist. Ebenso kann bevorzugt im Warmschaum-Modus ein unterschiedlicher Druck zwischen Pumpe und Drossel als im Kaltschaum-Modus realisiert werden.

Wie zuvor erwähnt, ist die erfindungsgemäße Vorrichtung insbesondere zum Erzeugen von Milchschaum geeignet. Untersuchungen haben ergeben, dass darüber hinaus auch ein Aufschäumen von Kaffee in überraschend hoher Qualität mittels der erfindungsgemäßen Vorrichtung möglich ist. Insbesondere kann mit der erfindungsgemäßen Vorrichtung kalter Kaffee aufgeschäumt werden, welcher somit nicht mittels des Durchlauferhitzers erwärmt wird, insbesondere unter Umgehung des Durchlauferhitzers über einen parallelen Flussweg. Ebenso kann mit der Vorrichtung in überraschend hoher Qualität warmer Kaffee aufgeschäumt werden. Hierbei wird bevorzugt frisch gebrühter warmer Kaffee ebenso ohne Erhitzung mittels des Durchlauferhitzers aufgeschäumt, insbesondere unter Umgehung des Durchlauferhitzers über einen parallelen Flussweg.

Insbesondere ist es vorteilhaft, mittels der Vorrichtung kalten oder warmen Kaffee teilweise aufzuschäumen und das Kaffee/Kaffeeschaumerzeugnis in einem Kühlschrank zu lagern. Auf diese Weise ist nach Bedarf kalter Kaffee vorrätig, welcher jedoch ausreichend Schaum aufweist.

Weitere bevorzugte Merkmale und Ausführungsformen werden im Folgenden anhand von Ausführungsbeispielen und den Figuren beschrieben. Dabei zeigt:
- Figur 1: ein erstes Beispiel einer Vorrichtung mit nur einem Flussweg;
- Figur 2: ein erfindungsgemäßes Ausführungsbeispiel mit zwei parallelen Flusswegen und zwei Drosseln und
- Figur 3: ein drittes Beispiel mit zwei parallelen Flusswegen und nur einer Drossel.

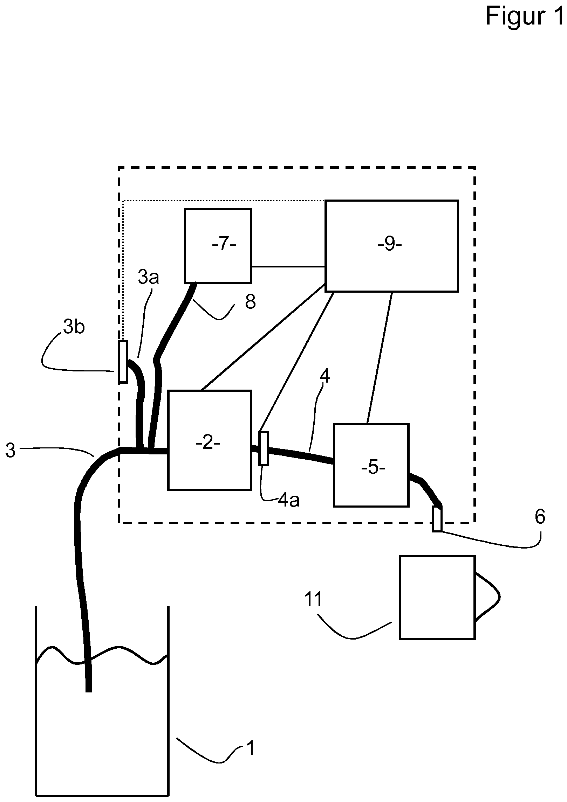

Die Figuren zeigen schematische, nicht maßstabsgetreue Darstellungen. Gleiche Bezugszeichen in den Figuren 1 bis 3 bezeichnen gleiche oder gleichwirkende Elemente.

Figur 1 zeigt ein erstes Beispiel einer Vorrichtung. Die Vorrichtung ist zum Aufschäumen von Milch ausgebildet, welche sich in einem Behälter 1 befindet. Der Behälter 1 ist in einem (nicht dargestellten) Kühlraum angeordnet.

Mittels einer Pumpe 2, welche saugseitig eine Förderleitung 3 aufweist, wird Milch aus dem Behälter 1 gefördert. Die Vorrichtung weist weiterhin eine Luftzufuhr auf, welche eine Luftzuführleitung 3a und ein Luftventil 3b aufweist.

Das Luftventil 3b ist an einem gestrichelt dargestellten Gehäuse der Vorrichtung angeordnet, so dass Luft aus der Umgebung der Vorrichtung angesaugt werden kann. Die Luftzuführleitung 3a mündet saugseitig der Pumpe 2 in die Förderleitung 3, wobei an der Einmündstelle ein Venturielement derart angeordnet ist, dass bei Fördern von Milch aus dem Behälter 1 mittels der Pumpe 2 Luft durch das Luftventil 3b über die Luftzuführleitung 3a der Milch in der Förderleitung 3 zugeführt wird.

Die Pumpe 2 ist als Zahnradpumpe ausgebildet.

In einer Druckleitung 4 ist druckseitig der Pumpe zunächst eine Drossel 4a und weiter stromabwärts ein Durchlauferhitzer 5 angeordnet. Weiter stromabwärts des Durchlauferhitzers 5 mündet die Druckleitung 4 in einen Auslass 6, so dass der Milchschaum in ein Gefäß wie beispielsweise eine Tasse 11 ausgegeben werden kann.

Die Drossel 4a ist als variable Drossel ausgebildet, so dass mittels einer Steuereinheit 9 der Vorrichtung zwei verschiedene Durchflussquerschnitte der Drossel 4a vorgebbar sind.

Wählt der Benutzter nun über ein (nicht dargestelltes) Bedienfeld die Ausgabe von kaltem Milchschaum so wird mittels der Steuereinheit 9 ein erster Durchflussquerschnitt der Drossel 4a eingestellt und mittels der Pumpe 2 das Milch-Luftgemisch bei ausgeschaltetem Durchlauferhitzer 5 der Milchschaum aus dem Auslass 6 ausgegeben. Wählt der Benutzer hingegen warmen Milchschaum, so wird mittels der Steuereinheit 9 ein zweiter Durchflussquerschnitt, welcher unterschiedlich zu dem ersten Durchflussquerschnitt ist, an der Drossel 4a eingestellt, der Durchlauferhitzer 5 aktiviert und entsprechend mittels der Pumpe 2 warmer Milchschaum aus dem Auslass 6 ausgegeben.

In der Steuereinheit 9 sind somit die optimierten Parameter insbesondere hinsichtlich des Drosselquerschnitts der Drossel 4a und der Fördergeschwindigkeit der Pumpe 2 einerseits für warmen Milchschaum und andererseits für kalten Milchschaum gespeichert und werden entsprechend dem gewählten Betriebsmodus abgerufen und an die einzelnen Komponenten mittels Steuersignalen weitergegeben.

Das Luftventil 3b ist vorliegend als handbetätigbares Luftventil ausgebildet, so dass der Benutzer per Hand eine Optimierung der zugeführten Luftmenge durchführen kann.

Der Drosselquerschnitt ist im Kaltschaum-Modus und im Warmschaum-Modus in etwa kreisförmig und weist im Kaltschaum-Modus einen Durchmesser von 0,9 mm und im Warmschaum-Modus einen Durchmesser von 0,7 mm auf. Der Druck zwischen Pumpe und Drossel beträgt im Kaltschaum-Modus etwa 4 bar und im Warmschaum-Modus etwa 5 bar. Der Druck stromabwärts der Drossel beträgt in beiden Fällen etwa 0,5 bar.

Das Luftventil kann als elektrisch regelbares Luftventil ausgebildet und ebenfalls mit der Steuereinheit 9 verbunden sein (durch eine gepunktete Linie dargestellt). Hierdurch kann der Luftzuführfluss durch die Steuereinheit 9 automatisch vorgegeben werden und insbesondere bei Erzeugen von warmem Milchschaum ein anderer Luftzuführfluss gegenüber dem Erzeugen von kaltem Milchschaum vorgegeben werden.

In einer weiter bevorzugten Variante des Ausführungsbeispiels ist das Luftventil 3b als intermittierendes Luftventil gemäß EP 2 298 142 B1 ausgebildet und ebenfalls mit der Steuereinheit 9 verbunden, so dass mittels der Steuereinheit über eine Vorgabe von Taktfrequenz und DC (Duty Cycle), d. h. Vorgabe des Tastverhältnisses die Luftzuführmenge als weiterer Parameter einerseits für den Kaltschaum-Modus und andererseits für den Warmschaum-Modus gespeichert ist und entsprechend der Benutzerwahl mittels Steuersignalen an das Luftventil 3b weitergegeben wird.

Zum Reinigen der Vorrichtung ist eine Heißwassereinheit 7 vorgesehen mit einer Spülleitung 8, welche zwischen Luftzuführleitung 3a und Pumpe 2 in die Förderleitung 3 mündet.

In einem Reinigungsmodus wird mittels der Heißwassereinheit 7 heißes Wasser über die Spülleitung 8 mittels der Pumpe 2 angesaugt. Hierzu wird mittels der Steuereinheit 9 ein Spül-Drosselquerschnitt der Drossel 4a eingestellt, welcher keine Querschnittsverringerung gegenüber der Druckleitung zwischen Pumpe 2 und Drossel 4a aufweist. Der Durchlauferhitzer 5 kann somit mit einer hohen Durchflussgeschwindigkeit mittels des heißen Wassers gespült werden.

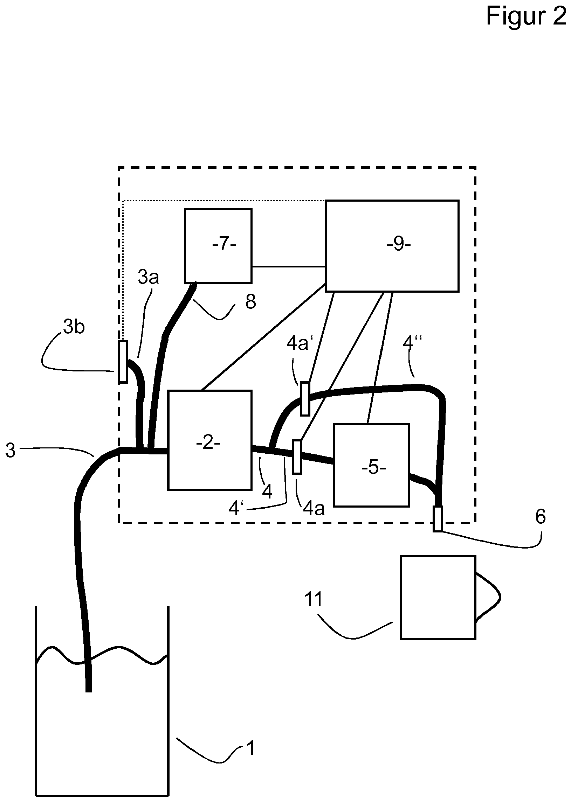

Figur 2 zeigt ein Ausführungsbeispiel einer erfindungsgemäßen Vorrichtung, welches einen ähnlichen Aufbau zu der im ersten Beispiel gezeigten Vorrichtung aufweist. Zur Vermeidung von Wiederholungen wird im Folgenden lediglich auf die wesentlichen Unterschiede eingegangen:
Das Ausführungsbeispiel weist zwei parallele Flusswege auf:
Druckseitig der Pumpe 2 verzweigt die Druckleitung 4 in einen ersten Flussweg 4' und einen zweiten Flussweg 4", wobei erster Flussweg 4' und zweiter Flussweg 4" parallel angeordnet sind und der Durchlauferhitzer 5 in dem ersten Flussweg 4' angeordnet ist. Beide parallelen Flusswege 4' und 4" münden gemeinsam in den Auslass 6.

Die Vorrichtung weist daher eine erste Drossel 4a und eine zweite Drossel 4a' auf. Beide sind im Ausführungsbeispiel als variable Drosseln ausgebildet und mit der Steuereinheit 9 verbunden. Die variablen Drosseln 4a und 4a' ermöglichen insbesondere die Vorgabe eines Drosselquerschnitts 0, d. h. sie bieten zusätzlich die Funktionsweise eines Ventils. Auf diese Weise kann somit durch Vorgabe des Drosselquerschnitts 0 in entweder der Drossel 4a oder der Drossel 4a' einer der beiden parallelen Flusswege vorgegeben werden, so dass zur Erzeugung von kaltem Milchschaum das Milch-Luftgemisch unter Umgehung des Durchlauferhitzers 5 über die weitere Drossel 4a' und den zweiten Flussweg 4" zu dem Auslass 6 geleitet wird und entsprechend zum Erzeugen von warmem Milchschaum anstatt des zweiten Flussweges 4" der erste Flussweg 4' mit der ersten Drossel 4a und dem Durchlauferhitzer 5 von dem Milch-Luftgemisch durchflossen wird.

Auch hierbei wird zum Erzeugen von kaltem Milchschaum in der ersten Drossel 4a ein unterschiedlicher Drosselquerschnitt vorgegeben im Vergleich zu dem vorgegebenen Drosselquerschnitt in der weiteren Drossel 4a' bei Erzeugen von warmem Milchschaum.

In einem alternativen Ausführungsbeispiel ist in jedem der beiden parallelen Flusswege 4' und 4" jeweils ein Ventil der variablen Drossel vorgeschaltet, wobei beide Ventile ebenfalls mit der Steuereinheit 9 verbunden sind, so dass in diesem Fall die Drosseln 4a und 4a' nicht derart ausgebildet sein müssen, dass ein Drosselquerschnitt 0 vorgebbar ist, sondern die Wahl des Durchflussweges durch entsprechendes Schalten der beiden vorgenannten Ventile erfolgt.

Das Spülen der Vorrichtung erfolgt wie bereits bei Figur 1 beschrieben, wobei bei der Vorrichtung gemäß Figur 2 beide Flusswege sequentiell hintereinander gespült werden.

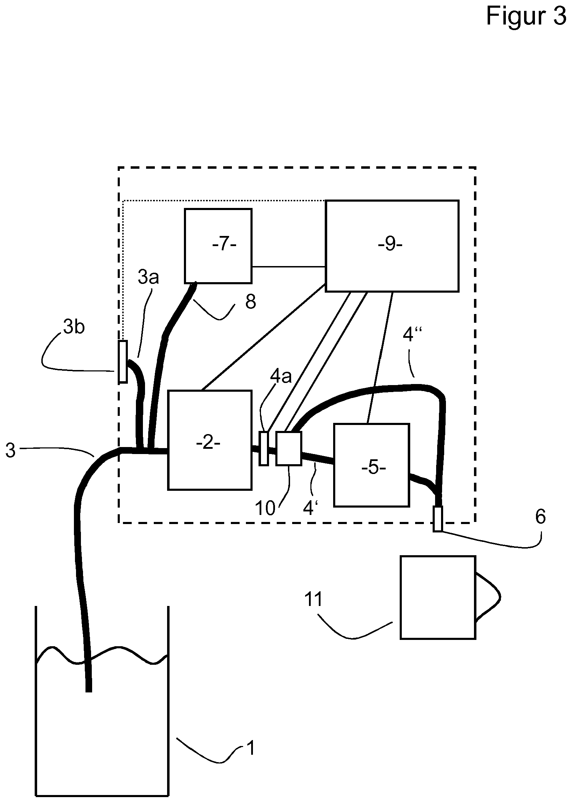

Figur 3 zeigt als drittes Beispiel eine Vorrichtung, welche im Aufbau grundsätzlich dem zweiten Ausführungsbeispiel gemäß Figur 2 gleicht. Auch hier wird zur Vermeidung von Wiederholungen lediglich auf die wesentlichen Unterschiede eingegangen:
Im Unterschied zu Figur 2 ist lediglich ein variables Drosselventil 4a vorgesehen und darüber hinaus ein Mehrwegeventil 10 an der Verzweigung der Druckleitung 4 zu dem ersten Flussweg 4' und dem zweiten Flussweg 4".

In dem Kaltschaum-Modus wird mittels der Steuereinheit 9 das Mehrwegeventil somit derart geschaltet, dass das Milch-Luftgemisch über den zweiten Flussweg 4" ausgegeben wird. Gleichzeitig wird - wie bei dem ersten Ausführungsbeispiel beschrieben - die variable Drossel 4a auf einen gespeicherten ersten Drosselquerschnitt eingestellt. Entsprechend wird in einem Warmschaum-Modus das Mehrwegeventil 10 derart geschaltet, dass das Milch-Luftgemisch über den zweiten Flussweg 4" und den Durchlauferhitzer 5 unter Erwärmung zu dem Auslass 6 ausgegeben wird, wobei mittels der Steuereinheit 9 die variable Drossel 4a auf einen zweiten Drosselquerschnitt gestellt wird.

## Patentansprüche

1. Vorrichtung zum Aufschäumen eines flüssigen Lebensmittels, insbesondere von Milch, welche Vorrichtung eine Pumpe (2) zum Fördern des flüssigen Lebensmittels aus einem Behälter (1), einen Durchlauferhitzer (5), mindestens eine Drossel (4a, 4a') und eine Luftzufuhr aufweist, wobei die mindestens eine Drossel (4a, 4a') und der Durchlauferhitzer (5) druckseitig der Pumpe (2) angeordnet sind und die Luftzufuhr zum Zuführen von Luft in einen Flussweg des Lebensmittels stromaufwärts der mindestens einen Drossel (4a, 4a') ausgebildet und angeordnet ist,
**dadurch gekennzeichnet, dass**
die Vorrichtung druckseitig der Pumpe zumindest zwei Flusswege (4', 4") für das Lebensmittel-Luftgemisch aufweist, wobei in einem ersten (4') der zumindest zwei parallelen Flusswege (4', 4") der Durchlauferhitzer (5) und eine erste Drossel (4a') mit einem ersten Drosselquerschnitt angeordnet sind, und in einem zweiten (4") der zumindest zwei parallelen Flusswege (4', 4") eine zweite Drossel (4a') mit einem zweiten Drosselquerschnitt angeordnet ist, wobei erster und zweiter Drosselquerschnitt unterschiedlich sind, und dass die Vorrichtung derart ausgebildet ist, dass für das Lebensmittel-Luftgemisch wahlweise in einem Warmschaum-Modus der erste (4') Flussweg (4') durch die erste Drossel (4a) sowie durch den Durchlauferhitzer (5) oder in einem Kaltschaum-Modus der zweite Flussweg (4") durch die zweite Drossel (4a') vorgebbar ist.

2. Vorrichtung nach Anspruch 1, bei der die erste Drossel (4a) zwischen der Pumpe (2) und dem Durchlauferhitzer (5) angeordnet ist.

3. Vorrichtung nach einem der vorangegangenen Ansprüche, bei der die Luftzufuhr saugseitig der Pumpe (2) angeordnet ist.

4. Vorrichtung nach einem der vorangegangenen Ansprüche, bei der die Luftzufuhr als variable Luftzufuhr ausgebildet ist, so dass wahlweise zumindest zwei unterschiedliche Luftzuführströme vorgebbar sind.

5. Vorrichtung nach Anspruch 4, bei der die Vorrichtung eine Steuereinheit (9) aufweist, welche zumindest mit der Luftzufuhr derart zusammenwirkend ausgebildet ist, dass in dem Warmschaum-Modus Luft mit einem ersten Luftzuführfluss und in einem Kaltschaum-Modus Luft mit einem zweiten Luftzuführfluss dem Lebensmittel zuführbar ist, wobei erster und zweiter Luftzuführfluss unterschiedlich sind.

6. Vorrichtung nach einem der vorangegangenen Ansprüche, bei der die Vorrichtung eine Spülleitung (8) aufweist, zum Zuführen von Spülflüssigkeit und/oder Dampf zumindest zu der ersten Drossel (4a) und dem Durchlauferhitzer (5) und dass die erste Drossel (4a) als variable Drossel mit einem variable Drosselquerschnitt ausgebildet ist, so dass wahlweise ein Spül-Drosselquerschnitt vorgebbar ist, wobei der Spül-Drosselquerschnitt größer als der erste und der zweite Drosselquerschnitt ist.

7. Vorrichtung nach einem der vorangegangenen Ansprüche, bei der die Pumpe (2) und beiden Drosseln (4a, 4a') derart zusammenwirkend ausgebildet sind, dass zwischen Pumpe (2) und der Drossel (4a, 4a') ein Druck im Bereich 2 bar bis 10 bar, insbesondere im Bereich 3 bar bis 7 bar, bevorzugt etwa 5 bar vorliegt, insbesondere im Kaltschaum-Modus und im Warmschaum-Modus.

8. Kaffeemaschine zum Erzeugen von Kaffee-Mischgetränken,
mit einer Brüheinheit zum Erzeugen von Kaffee und einer Vorrichtung zum Aufschäumen eines flüssigen Lebensmittels nach einem der vorangegangenen Ansprüche.

9. Verfahren zum Aufschäumen eines flüssigen Lebensmittels, insbesondere von Milch, wobei das flüssige Lebensmittel mit Luft vermischt und das Lebensmittel-Luftgemisch wahlweise
- in einem Warmschaum-Modus durch einen ersten druckseitig einer Pumpe (2) angeordneten Flussweg (4') gepumpt wird, wobei es entlang des ersten Flussweges (4') durch eine erste Drossel (4a) mit einem ersten Drosselquerschnitt gedrosselt wird und in einem Durchlauferhitzer (5) erwärmt wird oder
- in einem Kaltschaum-Modus durch einen zu dem ersten Flussweg (4') parallelen zweiten Flussweg (4") gepumpt wird, entlang dessen es durch eine zweite Drossel (4a') mit einem zweiten Drosselquerschnitt gedrosselt wird,
wobei erster und zweiter Drosselquerschnitt unterschiedlich sind.

10. Verfahren nach Anspruch 9, bei dem in dem Warmschaum-Modus Luft mit einem ersten Luftzuführfluss und in dem Kaltschaum-Modus Luft mit einem zweiten Luftzuführfluss zugeführt wird, wobei erster und zweiter Luftzuführfluss unterschiedlich sind.

11. Verfahren nach einem der vorangegangenen Ansprüche 9 bis 10, bei dem zumindest die erste Drossel (4a) als variable Drossel ausgeführt ist, deren Drosselquerschnitt und in einem Spülmodus Wasser und/oder Dampf durch die erste Drossel (4a) und den Durchlauferhitzer (5) gleitet wird und in dem Spülmodus die Reduzierung der variablen Drossel (4a) auf einen Spül-Drosselquerschnitt gestellt wird, wobei der Spül-Drosselquerschnitt größer als der erste und der zweite Drosselquerschnitt ist.

12. Verfahren nach einem der vorangegangenen Ansprüche 9 bis 11, bei dem mittels des Verfahrens Kaffee aufgeschäumt wird.

## Claims

1. Device for foaming a liquid foodstuff, especially milk, which device has a pump (2) for conveying the liquid foodstuff out of a container (1), a continuous-flow heater (5), at least one throttle (4a, 4a') and an air supply, wherein the at least one throttle (4a, 4a') and the continuous-flow heater (5) are arranged on the pressure side of the pump (2) and the air supply is configured and arranged to supply air in a flow path of the foodstuff upstream of the at least one throttle (4a, 4a'),
**characterised in that**
the device has, on the pressure side of the pump, at least two flow paths (4', 4") for the foodstuff/air mixture, wherein the continuous-flow heater (5) and a first throttle (4a') having a first throttle cross-section are arranged in a first (4') of the at least two parallel flow paths (4', 4"), and a second throttle (4a') having a second throttle cross-section is arranged in a second (4") of the at least two parallel flow paths (4', 4"), the first and second throttle cross-sections being different, and the device is configured in such a way that for the foodstuff/air mixture either, in a hot-foam mode, the first (4') flow path (4') through the first throttle (4a) and through the continuous-flow heater (5) is selectable or, in a cold-foam mode, the second flow path (4") through the second throttle (4a') is selectable.

2. Device according to claim 1,
wherein the first throttle (4a) is arranged between the pump (2) and the continuous-flow heater (5).

3. Device according to either one of the preceding claims, wherein the air supply is arranged on the suction side of the pump (2).

4. Device according to any one of the preceding claims, wherein the air supply is in the form of a variable air supply so that, as desired, at least two different air-supply streams are selectable.

5. Device according to claim 4, wherein the device has a control unit (9) which is configured to co-operate at least with the air supply in such a way that, in the hot-foam mode, air is suppliable to the foodstuff at a first air-supply flow rate and, in a cold-foam mode, air is suppliable to the foodstuff at a second air-supply flow rate, the first and second air-supply flow rates being different.

6. Device according to any one of the preceding claims, wherein the device has a flushing line (8) for supplying flushing fluid and/or steam at least to the first throttle (4a) and the continuous-flow heater (5), and the first throttle (4a) is in the form of a variable throttle having a variable throttle cross-section so that optionally a flushing throttle cross-section is selectable, the flushing throttle cross-section being larger than the first and the second throttle cross-section.

7. Device according to any one of the preceding claims, wherein the pump (2) and the two throttles (4a, 4a') are configured to co-operate in such a way that a pressure between the pump (2) and the throttle (4a, 4a') is in the range of from 2 bar to 10 bar, especially in the range of from 3 bar to 7 bar, preferably approximately 5 bar, especially in the cold-foam mode and in the hot-foam mode.

8. Coffee machine for producing mixed coffee drinks,
having a brewing unit for producing coffee and a device for foaming a liquid foodstuff according to any one of the preceding claims.

9. Method of foaming a liquid foodstuff, especially milk, wherein the liquid foodstuff is mixed with air and the foodstuff/air mixture is either
- in a hot-foam mode, pumped through a first flow path (4') arranged on the pressure side of a pump (2), the mixture being throttled along the first flow path (4') by a first throttle (4a) having a first throttle cross-section and being heated in a continuous-flow heater (5) or
- in a cold-foam mode, pumped through a second flow path (4") parallel to the first flow path (4'), along which second flow path the mixture is throttled by a second throttle (4a') having a second throttle cross-section,
the first and second throttle cross-sections being different.

10. Method according to claim 9, wherein in the hot-foam mode air is supplied at a first air-supply flow rate and in the cold-foam mode air is supplied at a second air-supply flow rate, the first and second air-supply flow rates being different.

11. Method according to either one of preceding claims 9 and 10, wherein at least the first throttle (4a) is configured as a variable throttle, the throttle cross-section of which is variable, and in a flushing mode water and/or steam is passed through the first throttle (4a) and the continuous-flow heater (5) and in the flushing mode the reduction of the variable throttle (4a) is set to a flushing throttle cross-section, the flushing throttle cross-section being larger than the first and the second throttle cross-section.

12. Method according to any one of preceding claims 9 to 11, wherein the method is used to foam coffee.

## Revendications

1. Dispositif dévolu au moussage d'un aliment liquide, du lait en particulier, lequel dispositif comprend une pompe (2) destinée à refouler l'aliment liquide hors d'un récipient (1), un réchauffeur instantané (5), au moins un étranglement (4a, 4a') et une amenée d'air, ledit étranglement (4a, 4a') à présence minimale, et ledit réchauffeur instantané (5), étant situés côté pression de ladite pompe (2), et ladite amenée d'air étant conçue et agencée pour délivrer de l'air dans un trajet d'écoulement dudit aliment liquide, en amont dudit étranglement (4a, 4a') à présence minimale,
**caractérisé par le fait que**
ledit dispositif est muni, côté pression de la pompe, d'au moins deux trajets d'écoulement (4', 4") dédiés au mélange aliment-air, sachant que le réchauffeur instantané (5), et un premier étranglement (4a) doté d'une première section transversale, sont intégrés dans un premier trajet (4') au sein des deux trajets parallèles d'écoulement (4', 4") à présence minimale, et qu'un second étranglement (4a') doté d'une seconde section transversale est intégré dans un second trajet (4"), au sein desdits deux trajets parallèles d'écoulement (4', 4") à présence minimale, les première et seconde sections transversales d'étranglement étant différentes ; et **par le fait que** ledit dispositif est réalisé de façon telle que, sélectivement, le premier trajet (4') d'écoulement du mélange aliment-air puisse être préétabli par le premier étranglement (4a), ainsi que par le réchauffeur instantané (5) dans un mode mousse chaude, ou le second trajet (4") d'écoulement dudit mélange puisse être préétabli par le second étranglement (4a') dans un mode mousse froide.

2. Dispositif selon la revendication 1, dans lequel le premier étranglement (4a) est interposé entre la pompe (2) et le réchauffeur instantané (5).

3. Dispositif selon l'une des revendications précédentes, dans lequel l'amenée d'air est placée côté aspiration de la pompe (2).

4. Dispositif selon l'une des revendications précédentes, dans lequel l'amenée d'air est réalisée en tant qu'amenée d'air variable, de façon telle qu'au moins deux courants différents d'arrivée d'air puissent être sélectivement préétablis.

5. Dispositif selon la revendication 4, ledit dispositif étant équipé d'une unité de commande (9) réalisée pour coopérer au moins avec l'amenée d'air de façon telle que de l'air puisse être délivré à l'aliment avec un premier flux d'arrivée d'air, dans le mode mousse chaude, et avec un second flux d'arrivée d'air dans un mode mousse froide, lesdits premier et second flux d'arrivée d'air étant différents.

6. Dispositif selon l'une des revendications précédentes, ledit dispositif étant équipé d'un conduit de rinçage (8) réalisé pour délivrer un liquide de rinçage, et/ou de la vapeur, au moins au premier étranglement (4a) et au réchauffeur instantané (5) ; et par le fait que ledit premier étranglement (4a) est réalisé en tant qu'étranglement variable doté d'une section transversale variable, de telle sorte qu'une section transversale d'étranglement de rinçage puisse être sélectivement préétablie, laquelle section transversale d'étranglement de rinçage est supérieure aux première et seconde sections transversales d'étranglement.

7. Dispositif selon l'une des revendications précédentes, dans lequel la pompe (2) et les deux étranglements (4a, 4a') sont réalisés pour coopérer de façon telle qu'il règne entre ladite pompe (2) et l'étranglement (4a, 4a'), en particulier dans le mode mousse froide et dans le mode mousse chaude, une pression située dans la plage de 2 bar à 10 bar, notamment dans la page de 3 bar à 7 bar, et mesurant environ 5 bar de préférence.

8. Machine à café destinée à la production de boissons mélangées à base de café, comprenant une unité de brassage affectée à la préparation de café et un dispositif conforme à l'une des revendications précédentes, dévolu au moussage d'un aliment liquide.

9. Procédé de moussage d'un aliment liquide, du lait en particulier, ledit aliment liquide étant mélangé à de l'air, et le mélange aliment-air étant sélectivement
- pompé, dans un mode mousse chaude, par l'intermédiaire d'un premier trajet d'écoulement (4') situé côté pression d'une pompe (2), en étant alors restreint, le long dudit premier trajet d'écoulement (4'), par un premier étranglement (4a) doté d'une première section transversale, puis réchauffé dans un réchauffeur instantané (5), ou
- pompé, dans un mode mousse froide, par l'intermédiaire d'un second trajet d'écoulement (4") qui est parallèle audit premier trajet d'écoulement (4'), et le long duquel il est restreint par un second étranglement (4a') doté d'une seconde section transversale,
les première et seconde sections transversales d'étranglement étant différentes.

10. Procédé selon la revendication 9, dans lequel de l'air est délivré avec un premier flux d'arrivée d'air, dans le mode mousse chaude, et avec un second flux d'arrivée d'air dans le mode mousse froide, lesdits premier et second flux d'arrivée d'air étant différents.

11. Procédé selon l'une des revendications 9 à 10 précédentes, dans lequel au moins le premier étranglement (4a) est réalisé en tant qu'étranglement variable dont la section transversale, de l'eau et/ou de la vapeur étant canalisée(s) par ledit premier étranglement (4a) et par le réchauffeur instantané (5), dans un mode rinçage, la réduction dudit étranglement variable (4a) étant réglée sur une section transversale d'étranglement de rinçage, dans ledit mode rinçage, laquelle section transversale d'étranglement de rinçage est supérieure aux première et seconde sections transversales d'étranglement.

12. Procédé selon l'une des revendications 9 à 11 précédentes, un moussage de café étant effectué au moyen dudit procédé.
